## Europäisches Patentamt
## European Patent Office
## Office européen des brevets

(19)

(11) Veröffentlichungsnummer: **0 010 622**
**B1**

(12) **EUROPÄISCHE PATENTSCHRIFT**

(45) Veröffentlichungstag der Patentschrift:
23.09.81

(21) Anmeldenummer: **79103695.7**

(22) Anmeldetag: **28.09.79**

(51) Int. Cl.³: **G 01 D 9/08**, G 01 D 9/28, G 01 D 15/10, G 01 D 15/28

(54) **Thermographische Aufzeichnungsvorrichtung.**

(30) Priorität: **06.11.78 US 957784**

(43) Veröffentlichungstag der Anmeldung:
**14.05.80 Patentblatt 80/10**

(45) Bekanntmachung des Hinweises auf die Patenterteilung:
**23.09.81 Patentblatt 81/38**

(84) Benannte Vertragsstaaten:
**DE FR GB**

(56) Entgegenhaltungen:
**US-A-3 754 279**
**US-A-3 975 742**
**US-A-4 017 868**
**US-A-4 119 974**

(73) Patentinhaber: **International Business Machines Corporation, Armonk, N.Y. 10504 (US)**

(72) Erfinder: **Giedd, Gary Robert, RD 1, Meddaugh Rd., Pleasant Valley, N.Y. 12560 (US)**
Erfinder: **Karsch, Arthur Frederick, 3573 Katrina Drive, Yorktown Heights, N.Y. 10598 (US)**
Erfinder: **Lindauer, Sidney L., 448 London Road, Yorktown Heights, N.Y. 10598 (US)**

(74) Vertreter: **Schröder, Otto H., Dr.-Ing., c/o International Business Machines Corporation Zurich Patent Operations Säumerstrasse 4, CH-8803 Rüschlikon/ZH (CH)**

## Thermographische Aufzeichnungsvorrichtung

Die Erfindung bezieht sich auf eine thermographische Aufzeichnungsvorrichtung zum gleichzeitigen Registrieren von Analogkurven und alphanumerischen Zeichen. Die Vorrichtung weist Transportmittel auf, die einen wärmeempfindlichen Aufzeichnungsträger mit gleichbleibender Geschwindigkeit über einen als Aufzeichnungsunterlage dienenden Profilkörper führen, sowie wenigstens einen galvanometrisch gesteuerten thermischen Schreibstift zum Auftragen der Analogkurven, und einen, aus einer Reihe von erhitzbaren Elementen bestehenden Druckkopf zum Drucken der alphanumerischen Zeichen.

Derartige Vorrichtungen dienen dazu, neben Analogkurven, die beispielsweise medizinische Daten wiedergeben, zusätzlich wichtige oder nützliche Beschriftungen auf den Aufzeichnungsträger aufzubringen, wie z. B. Datum und Zeitangaben sowie Patientendaten.

Eine solche Einrichtung ist bereits im U.S. Patent 3 754 279 beschrieben worden. Bei der dort gezeigten Vorrichtung kann die Betrachtung jedoch durch den über dem Registrierpapier angeordneten Druckkopf erschwert werden. Ferner ist der Druckkopf gegenüber den Analog-Schreibstiften versetzt, wodurch weitere Nachteile entstehen. Um Zeichen an der relativ zu den aufgezeichneten Kurven richtigen Stelle drucken zu können, müssen die Zeichen entweder später erzeugt oder aber zwischengespeichert werden. Bei Aufzeichnungsvorrichtungen mit umschaltbaren Papiergeschwindigkeiten wird dieses Problem noch vergrößert.

Eine andere Vorrichtung dieser Art ist im U.S. Patent 4 017 868 gezeigt. Hier werden die oben beschriebenen Probleme gelöst, indem das Aufzeichnen der Kurven und der Zeichen gleichzeitig und über der gleichen Aufzeichnungskante erfolgt. Wird jedoch die Verwendung eines breiten Druckkopfes erforderlich, beispielsweise um mehrere Zeichen gleichzeitig zu drucken, ergeben sich Probleme, da wenigstens einzelne der in einer dann längeren Reihe angeordneten thermischen Schreibelemente des Druckkopfes dazu tendieren, den Kontakt mit dem über der scharfen Schreibkante laufenden Registrierpapier zu verlieren. Es hat sich gezeigt, daß dieses Problem weder durch eine Erhöhung des Kurvenradius der Kante noch durch Verwendung eines elastischen Kantenmaterials behoben werden kann, da diese Vorkehrungen zu einer erheblichen Verschlechterung der Qualität der Kurvenaufzeichnung führen.

Die vorliegende Erfindung bietet eine diese Probleme vermeidende Aufzeichnungsvorrichtung, die dadurch gekennzeichnet ist, daß der Profilkörper zwei parallele, zur Transportrichtung des Aufzeichnungsträgers transversal verlaufende, eine schmale ebene Fläche begrenzende Kanten aufweist, und daß der Schreibstift im Bereich einer der Kanten und der Druckkopf im Bereich der ebenen Fläche gegen den über den Profilkörper geführten Aufzeichnungsträger gedrückt werden. In einer bevorzugten Ausführungsform besteht die durch die Kanten gebildete ebene Fläche wenigstens im Bereich des Druckkopfes aus einem elastischen Material.

Die durch die Erfindung erreichten Vorteile sind im wesentlichen darin zu sehen, daß Beschriftungen auf einem breiten Streifen des Registrierpapiers vorgenommen werden können, wobei die Schriftzeilen parallel oder transversal zur Papierbewegungsrichtung liegen können. Die Beschriftung erfolgt zeitlich gleichzeitig mit der Auftragung der Kurven und räumlich nur äußerst geringfügig gegenüber den Kurven versetzt, d. h., die Beschriftung erfolgt relativ zu den Kurven an der richtigen Stelle ohne daß Verzögerungsmaßnahmen erforderlich werden. Die Aufzeichnung der Kurven und Zeichen ist von hoher Qualität und die Betrachtung wird nicht durch die Sicht behindernde Bauteile der Anordnung beeinträchtigt.

Im folgenden wird die Erfindung anhand von lediglich einen Ausführungsweg darstellenden Zeichnungen näher erläutert. Es zeigt

Fig. 1 eine perspektivische Ansicht einer auf der Erfindung beruhenden Aufzeichnungsvorrichtung, und

Fig. 2 in größerem Maßstab eine Schnittansicht des als Aufzeichnungsunterlage dienenden Profilkörpers und des Druckkopfes.

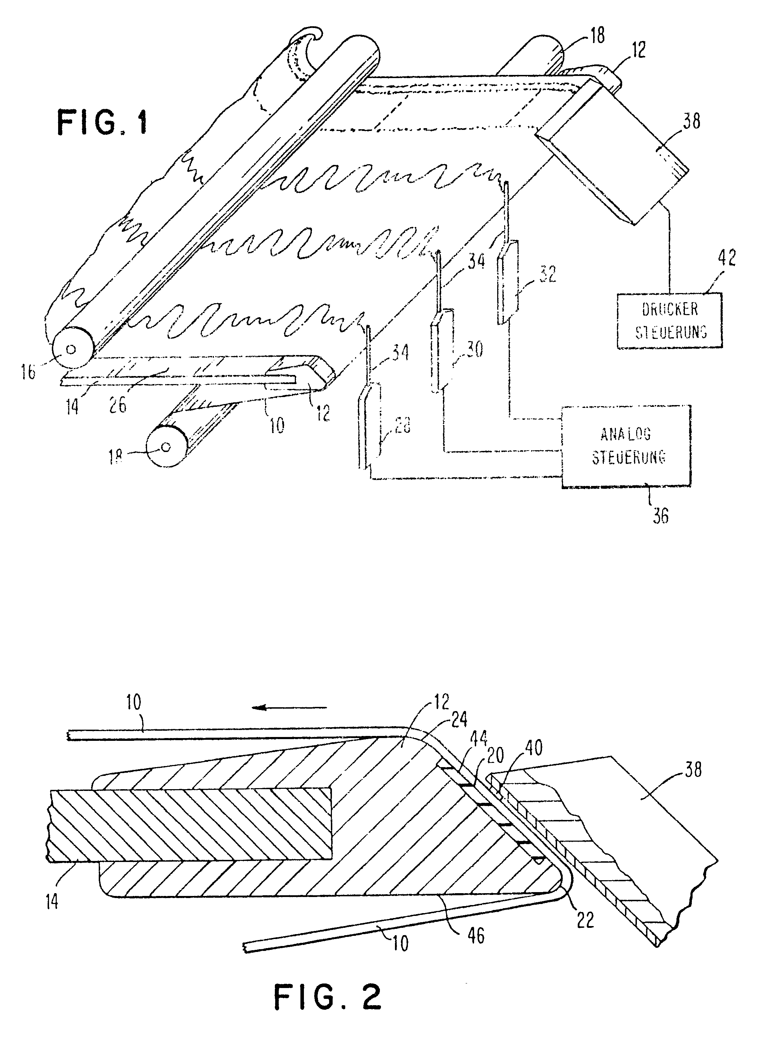

In Fig. 1 ist der thermographische Aufzeichnungsträger, im Ausführungsbeispiel ein Registrierpapier, mit 10 bezeichnet. Er besteht aus wärmeempfindlichem Material und wird mit konstanter Geschwindigkeit über den Profilkörper 12 der Unterlage 14 bewegt. Die Papierbewegung kann mit einer beliebigen konventionellen Transportvorrichtung vorgenommen werden, vorausgesetzt, der Kontakt zwischen dem Papier 10 und dem Profilkörper 12 bleibt erhalten. In der in Fig. 1 gezeigten Anordnung zieht die angetriebene Rolle 16 das Papier von der Spule 18, die eine minimale Zugspannung auf das Papier aufrechterhält.

Gemäß Fig. 2 weist der Profilkörper 12 zwei parallel zueinander verlaufende Kanten 22 und 24 auf, die eine dazwischen liegende ebene Fläche 20 begrenzen. Die Kanten 22 und 24 verlaufen transversal zur Bewegungsrichtung des Papierstreifens 10.

Die Kante 22 wirkt als Schreibkante für die galvanometrisch gesteuerten Schreibstifte 28, 30 und 32. Jeder Schreibstift hat eine längliche, heizbare, zylindrische Spitze 34, welche gegen das Papier 10 gedrückt wird, das seinerseits auf der Kante 22 aufliegt. Von der Schaltung 36 gelieferte Analogsignale bewirken, daß der Schreibstift transversal auf dem Papier bewegt wird und somit, bei bewegtem Registrierpapier, die gewünschte Kurve aufzeichnet.

Ein thermischer Druckkopf 38 weist eine Reihe von selektiv heizbaren Elementen 40 auf. Er wird gegen den flachen Bereich 20 des Profilkörpers 12 gedrückt, so daß die Reihe der thermischen Elemente 40 im Bereich der Fläche 20 in Kontakt mit dem Papier gebracht wird. Die Reihe der thermischen Elemente ist derart orientiert, daß die Achse der Reihe parallel zu den Kanten 22 und 24 verläuft. Werden die Elemente 40 richtig durch von der Schaltung 42 gelieferte Drucksignale aktiviert, so erzeugen sie die gewünschten Zeichen auf dem Papier 10. Die Zeichen werden reihenweise oder spaltenweise aus von den einzelnen thermischen Elementen 40 erzeugten Druckpunkten zusammengesetzt, d. h., die Zeilen der Beschriftung können entweder parallel zur Bewegungsrichtung des Papiers oder rechtwinklig dazu verlaufen.

In einem bevorzugten Ausführungsbeispiel finden 200 thermische Elemente Verwendung, die gestaffelt in einer Reihe angeordnet sind. Druckköpfe dieses Typs sind bekannt und auf dem Markt erhältlich. Die Gesamtausdehnung der Reihe in der parallel zur den Kanten 22 und 24 verlaufenden Richtung beträgt etwa 50 mm, während die Ausdehnung rechtwinklig dazu, d. h. in Richtung des Papiervorschubs, kleiner als 0,5 mm ist. Auch andere Druckköpfe können verwendet werden, die beispielsweise mehr als eine Reihe von thermischen Elementen aufweisen oder bei denen die Elemente nicht in einer geraden Reihe angeordnet sind.

Die ebene Fläche 20 besteht zumindest im Bereich der heizbaren Elemente 40 aus einem elastischen Material, wodurch die lange Reihe von heizbaren Elementen in einen gleichmäßigeren Kontakt mit dem Papier gebracht wird. Ein Hartgummi oder Tetrafluoräthylen (unter dem Warenzeichen Teflon auf dem Markt) sind hierfür geeignete Materialien. Ein Überzug aus Tetrafluoräthylen mit einer Dicke von 0,2 mm hat sich bewährt, wobei eine Rille dieser Tiefe und angemessener Breite über die gesamte Länge der Fläche 20 des Profilkörpers 12 gebildet und anschließend mit dem gewünschten Material gefüllt wurde. Durch Abschleifen des elastischen Materials bis auf die Höhe der Schultern der Rille wurde daraufhin die erforderliche ebene Fläche geschaffen. Mit Ausnahme des elastischen Bereichs besteht der Profilkörper 12 aus hartem Material, wie z. B. einem Metall.

Die Breite der ebenen Fläche, d. h. ihre Ausdehnung in Richtung der Papierbewegung, ist vorzugsweise geringer als die Längsausdehnung der Reihe 40, sie sollte nicht weniger als 1 mm und nicht mehr als 10 mm betragen. Für die meisten Anwendungszwecke ist ein Wert von 4 mm angebracht.

Der Kurvenradius der Kante 22 sollte im Bereich von 0,1 mm bis etwa 1 mm liegen. Ist der Radius zu klein, so tendiert das Papier dazu abzureißen, und ein zu großer Radius resultiert in einer schlechten Qualität der aufgezeichneten Kurven. Ein Radius von etwa 0,2 mm hat sich bewährt.

Der Durchmesser der erhitzbaren Schreibstiftspitzen 34 sollte etwa 1 bis 2 mm betragen, während die Ausrichtung der Spitzen vorzugsweise senkrecht zur Ebene der Betrachtungsplatte 26 sein sollte.

Die ebene Fläche 20 bildet mit der Ebene der Betrachtungsplatte 26 einen Winkel, der zwischen 90° und 150° liegt, vorzugsweise im Bereich zwischen 120° und 135°. Ein Winkel von 127,5° erwies sich als sehr geeignet. Wie aus den Zeichnungen ersichtlich ist, wird die von der Betrachtungsplatte 26 weiter entfernte Kante 22 für die Aufzeichnung der Kurven benutzt. Die Richtungsänderung des Papiers an dieser Kante sollte wenigstens 90° betragen. Zu diesem Zweck bildet die ebene Fläche 20 mit der Unterseite 46 des Profilkörpers einen Winkel von zwischen 30° und 90°, vorzugsweise im Bereich 45° bis 60°. Ein Winkel von 52,5° erwies sich als sehr geeignet.

**Patentansprüche**

1. Thermographische Aufzeichnungsvorrichtung zum gleichzeitigen Registrieren von Analogkurven und alphanumerischen Zeichen mit Transportmitteln (16, 18), die einen wärmeempfindlichen Aufzeichnungsträger (10) mit gleichbleibender Geschwindigkeit über einen als Aufzeichnungsunterlage dienenden Profilkörper (12) führen, mit wenigstens einem galvanometrisch gesteuerten thermischen Schreibstift (28, 30, 32) zum Auftragen der Analogkurven, und mit eine, aus einer Reihe von erhitzbaren Elementen (40) bestehenden Druckkopf (38) zum Drucken der alphanumerischen Zeichen, dadurch gekennzeichnet, daß der Profilkörper (12) zwei parallele, zur Transportrichtung des Aufzeichnungsträgers transversal verlaufende, eine schmale ebene Fläche (20) begrenzende Kanten (22, 24) aufweist, und daß der Schreibstift (28, 30, 32) im Bereich einer der Kanten (22) und der Druckkopf (38) im Bereich der ebenen Fläche (20) gegen den über den Profilkörper (12) geführten Aufzeichnungsträger (10) gedrückt werden.

2. Vorrichtung nach Patentanspruch 1, dadurch gekennzeichnet, daß die ebene Fläche (20) wenigstens im Bereich (44) des Druckkopfes (38) aus einem elastischen Material besteht.

3. Vorrichtung nach Patentanspruch 2, dadurch gekennzeichnet, daß als elastisches Material Tetrafluoräthylen verwendet wird.

4. Vorrichtung nach Patentanspruch 1, dadurch gekennzeichnet, daß der Kurvenradius der Kante (22) des Profilkörpers (12), gegen die der Schreibstift (28, 30, 32) gedrückt wird, 0,1 mm bis 1 mm beträgt.

5. Vorrichtung nach Patentanspruch 1, dadurch gekennzeichnet, daß die Flächen (20 und 46) des Profilkörpers, die die Kante (22) bilden, gegen die der Schreibstift gedrückt wird, in einem Winkel zueinander stehen, der 45° bis 60° beträgt.

## Claims

1. Thermographic recording device for simultaneous recording of analog graphs and alpha numeric characters, comprising transport means (16, 18) for moving a thermally sensitive record medium (10) at constant speed around an edge structure (12) which serves as a recording support, at least one galvanometrically controlled thermal stylus (28, 30, 32) for plotting the analog graphs, and a print head (38) for printing the alphanumeric characters which consists of an array of heatable elements (40), characterized in that the edge structure (12) comprises two edges (22, 24), parallel to each other and transverse to the direction of movement of the record medium and which define an elongate flat surface (20), and that the stylus (28, 30, 32) in the region of one of the edges (22), and the print head (38), in the region of the flat surface (20), are urged against the guided record medium (10).

2. A device as claimed in claim 1, characterized in that the flat surface (20) consists, at least in the region (44) opposing the print head (38), of a resilient material.

3. A device as claimed in claim 2, characterized in that the resilient material consists of tetrafluorethylene.

4. A device as claimed in claim 1, characterized in that the radius of curvature of the edge (22) of the edge structure (12) against which the stylus (28, 30, 32) is urged is within the range of 0,1 mm to 1 mm.

5. A device as claimed in claim 1, characterized in that the surfaces (20 and 46) of the edge structure that form the edge (22) against which the styrlus is urged, form an angle in the range of 45° to 60°.

## Revendications

1. Dispositif d'enregistrement thermique pour l'enregistrement simultané de courbes analogiques et de caractères alphanumériques, comportant des moyens de transport (16, 18) pour faire avancer un milieu d'enregistrement thermosensible (10) à vitesse constante sur un élément profilé (12) servant de support d'enregistrement, avec au moins un stylet thermique (28, 30, 32) commandé galvanométriquement pour tracer des courbes analogiques, et avec une tête imprimante (38) composée d'une série d'éléments pouvant être chauffés pour imprimer les caractères alphanumériques, caractérisé en ce que l'élément profilé (12) est muni de deux bords (22, 24) parallèles, transversaux à la direction de transport du milieu d'enregistrement et délimitant une surface plane étroite (20), et en ce que le stylet (28, 30, 32) dans la zone d'un des bords (22) et la tête imprimante (38) dans la zone de la surface plane (20) sont pressés contre le milieu d'enregistrement (10) passant sur l'élément profilé (12).

2. Dispositif selon la revendication 1, caractérisé en ce que la surface plane (20), au moins dans la zone (44), de la tête imprimante (38) est composée d'un matériau élastique.

3. Dispositif selon la revendication 2, caractérisé en ce que le matériau élastique utilisé est le tétrafluoréthylène.

4. Dispositif selon la revendication 1, caractérisé en ce que le rayon de courbure du bord (22) de l'élément profilé (12) contre lequel est pressé le stylet (28, 30, 32) est compris entre 0,1 mm et 1 mm.

5. Dispositif selon la revendication 1, caractérisé en ce que les surfaces (20 et 46) de l'élément profilé, qui forment le bord (22), contre lequel s'appuie le stylet sont disposées l'une par rapport à l'autre selon un angle compris entre 45° et 60°.

FIG. 1

DRUCKER STEUERUNG

ANALOG STEUERUNG

FIG. 2